# EUROPEAN PATENT SPECIFICATION

(11) **EP 3 743 637 B1**
(45) Date of publication and mention of the grant of the patent: **23.02.2022**
(21) Application number: 18814825.8
(22) Date of filing: 29.11.2018
(51) Int. Cl.: F16F 9/34, F16F 9/36, F16F 9/516, F16F 9/19, F16F 9/32, F16F 9/20

(54) **IMPROVEMENTS IN DAMPERS**
VERBESSERUNGEN AN DÄMPFERN
AMÉLIORATION DES AMORTISSEURS

(30) Priority: 25.01.2018 GB 201801231
(43) Date of publication of application: 02.12.2020
(73) Proprietor: Titus d.o.o. Dekani, 6271 Dekani (SI)
(72) Inventor: STRAVNIK, Nejc, 6310 Izola (SI); PECAR, David, 6276 Pobegi (SI)
(74) Representative: Treeby, Philip David William
(86) International application number: PCT/EP2018/083032
(87) International publication number: WO 2019/145071

(56) References cited:
- WO-A1-2014/177521
- WO-A1-2016/148584

## Description

This invention relates to dampers.

It is herein acknowledged that WO 2014/177521 A1 discloses a damper assembly with a cylinder having a piston assembly mounted for reciprocal movement therein, wherein the piston assembly divides the cylinder into separate chambers with a restricted flow path therebetween for passage of damping fluid contained within the cylinder, and the restricted flow path is defined between elements whose shape and/or relative position is designed to vary with temperature.

In accordance with the present invention, there is provided a piston and cylinder type damper as recited by claim 1. Preferred features are set out in the dependent claims.

By way of example, an embodiment of the invention will now be described with reference to the accompanying drawings, in which:
Figure 1 is a cross-sectional view of a first form of damper according to the invention,
Figures 2 and 3 are cross-sectional detail views of the piston assembly of the damper of Figure 1,
Figure 4 is a cross-sectional view of a second form of damper according to the invention,
Figures 5 and 6 are cross-sectional detail views of the piston assembly of the damper of Figure 4,
Figure 7 is a cross-sectional detail view of an alternative form of piston assembly for the damper of Figure 4,
Figure 8 is a cross-sectional detail view of an alternative form of piston assembly for the damper of Figure 1,
Figure 9 is a cross-sectional view of an alternative form of piston assembly,
Figure 10 is a sectional view of the piston assembly of Figure 9 along the lines A-A,
Figure 11 is a cross-sectional view of a third form of damper according to the invention,
Figure 12 is a cross sectional detail view of the piston assembly of the damper of Figure 11, and
Figure 13 is a cross sectional detail view of an alternative form of piston assembly for the damper of Figure 11.

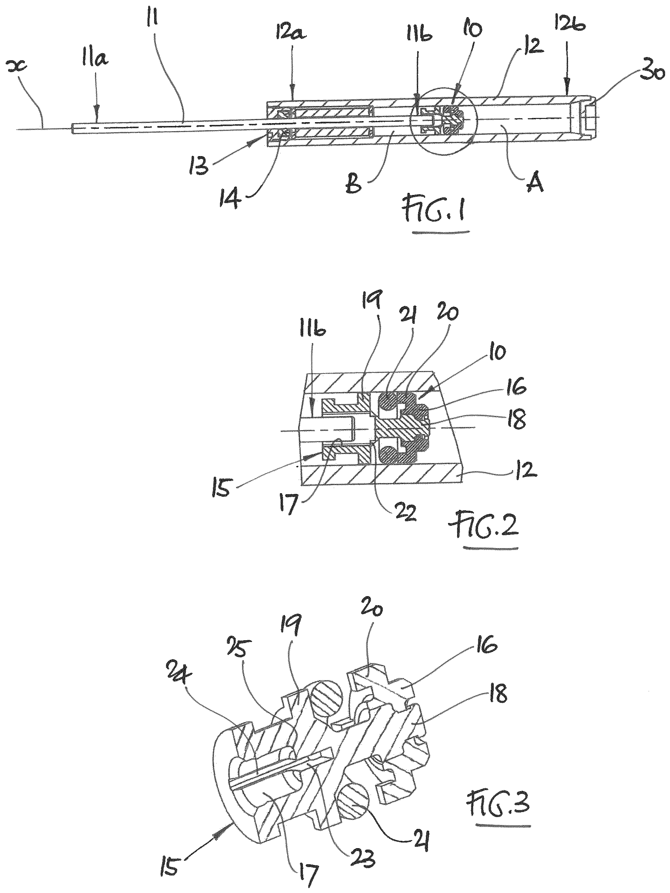

The damper seen in Figure 1 is a linear piston and cylinder type damper of conventional circular cross-sectional form. The damper has a longitudinal axis x, a piston assembly 10, a piston rod 11 and a cylinder 12. The cylinder 12 contains damping fluid, such as oil or silicone. The piston rod 11 is mounted for reciprocal movement with respect to the cylinder 12 along its longitudinal axis x. A free end 11a of the piston rod 11 extends out of one end 12a of the cylinder 12, which is closed off by a seat assembly 13. The seat assembly 13 provides support for the slidable mounting of the piston rod 11 and a suitable seal 14 to prevent leakage of damping fluid out of the cylinder 12. The cylinder 12 is closed off at its other end 12b by a cover 30.

The other end 11b of the piston rod 11 extends into the interior of the cylinder 12 where it engages the piston assembly 10. The piston assembly 10 divides the interior of the cylinder 12 into two separate chambers A and B, with a passageway for flow of damping fluid between them, as will be described in more detail below.

The piston assembly 10 is seen in greater detail in Figures 2 and 3. It will be seen that it is made in two parts: an elongate valve body 15 and a cap 16. The valve body 15 has an axially extending bore 17 at one end, which receives the inner end 11b of the piston rod 11. At its other end the valve body 15 has an axially extending spigot 18 to which the cap 16 is attached. The cap 16 conveniently attaches to the spigot 18 by means of a snap-fit connection, both parts being made of suitable plastics material to allow this.

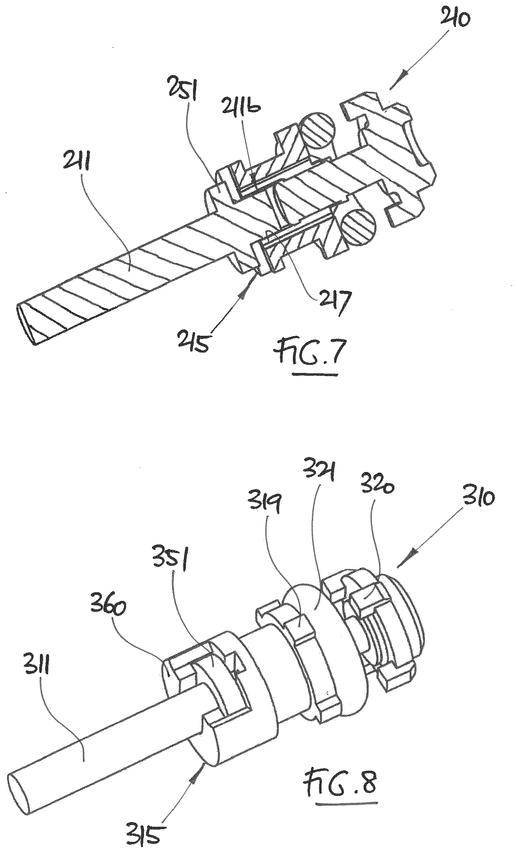

The valve body 15 has a radially outwardly extending flange 19. The flange 19 is of a castellated type of construction, with a number of teeth extending out to an overall outer diameter just slightly less than the bore of the cylinder 12, with reduced diameter segments in between (a flange 319 of this kind of construction can be seen more clearly in Figure 8). The reduced diameter segments form part of the passageway for flow of damping fluid past the piston assembly 10, and their relatively large cross-sectional area means that they provide minimal resistance to this flow. The teeth on the flange 19 co-operate with the bore of the cylinder 12, which helps to guide the axial movement of the piston assembly 10.

The cap 16 also has a radially outwardly extending flange 20 of a similar castellated type construction. A sealing element in the form of an O-ring 21 is captured between the two flanges 19, 20. The spacing between the flanges 19, 20 allows a limited amount of axial movement of the O-ring 21 with respect to the piston assembly 10. The O-ring 21 is in sealing engagement with the bore of the cylinder 12, and its axial movement is used in controlling flow of damping fluid between the chambers A and B in operation of the damper, as will be described in more detail below.

The passageway that allows flow of damping fluid across the piston assembly 10 includes ports 22 in the valve body 15 (see Figure 2) that are open to chamber A and that lead into the bore 17 via apertures 23 in the valve body (see Figure 3). The apertures 23 in turn lead into axially extending grooves 24 in the bore 17 of the valve body 15 that are open to chamber B. In this case, there are two ports 22, arranged as a diametrically opposite pair, with the apertures 23 and the grooves 24 likewise being arranged as diametrically opposing pairs. The inner end 11b of the piston rod 11 is designed to be received within the bore 17 so as to occlude it, leaving just the grooves 24 as open pathways. In this way, the grooves 24 effectively constitute a restricted passage, and this is what is used to control flow of fluid from chamber A to chamber B in operation of the damper.

Control of the fluid flow is governed partly by the combined cross-sectional area of the grooves 24 and partly by their axial length. The length of the grooves 24 is determined by the extent to which the piston rod 11 extends into the bore 17, and this is determined by the position of an inner shoulder 25 in the bore against which the inner end 11b of the piston rod abuts.

It has been found to be advantageous to design the restricted passage in the form described above, because it is easier to control its manufacture on a production line within acceptable tolerances than it is by other means, such as by producing small holes. The design also has the benefit of allowing dampers with different damping characteristics to be produced using essentially the same modular parts, for example by simply varying the position of the shoulder 25 within the valve body 15 to vary the length of the grooves 24 and/or using different coring to vary the cross-sectional area of the grooves.

The damper seen here is designed to provide a damped resistance on its working stroke, which is upon axial movement of the piston rod 11 into the cylinder 12. It is further designed to provide minimal damped resistance on its return stroke, which is upon extension of the piston rod out of the cylinder. The damping is controlled by the O-ring 21. On the working stroke, the O-ring 21 will be picked up by the flange 19 on the valve body 15 as the piston rod 11 moves into the cylinder 12. This is the position seen in Figure 3. In this position, the O-ring 21 creates a seal between the flange 19 and the bore of the cylinder 12. This means that the only passageway for fluid forced out of chamber A to flow across the piston assembly 10 is via the restricted passage, ie the grooves 24. Hence, a damped resistive force is generated against this movement.

On the return stroke, the O-ring 21 will be released from the flange 19 as the piston rod 11 moves out of the cylinder 12, thus allowing fluid to flow freely past it via the reduced diameter segments in the flange 19. This is the position seen in Figure 2. Since there is a much greater passageway for flow of fluid in this position, the return stroke will experience only minimal damped resistance.

It will be noted that the spigot 18 of the valve body 15 has an outer diameter that is significantly smaller than the internal bore of the O-ring 21. This is desirable, because it creates a relatively large cross-sectional area for flow of fluid, and hence minimises resistance to the return stroke of the damper. This design is enabled by arranging for the restricted passage, ie the grooves 24, to be positioned at an axially spaced location from the O-ring 21. In its extent through the internal bore of the O-ring 21, the spigot 18 occupies a proportion of the cross-sectional area of the O-ring bore of less than half, and preferably less than a third.

The damper seen in Figure 1 is one in which the free end 11a of its piston rod 11 would typically be connected to a furniture part, for example a drawer, whilst the cylinder 12 would be mounted to another part, for example a cabinet. With such an arrangement, the piston rod 11 will be positively moved in and out of the cylinder 12 by the opening and closing movement of the drawer.

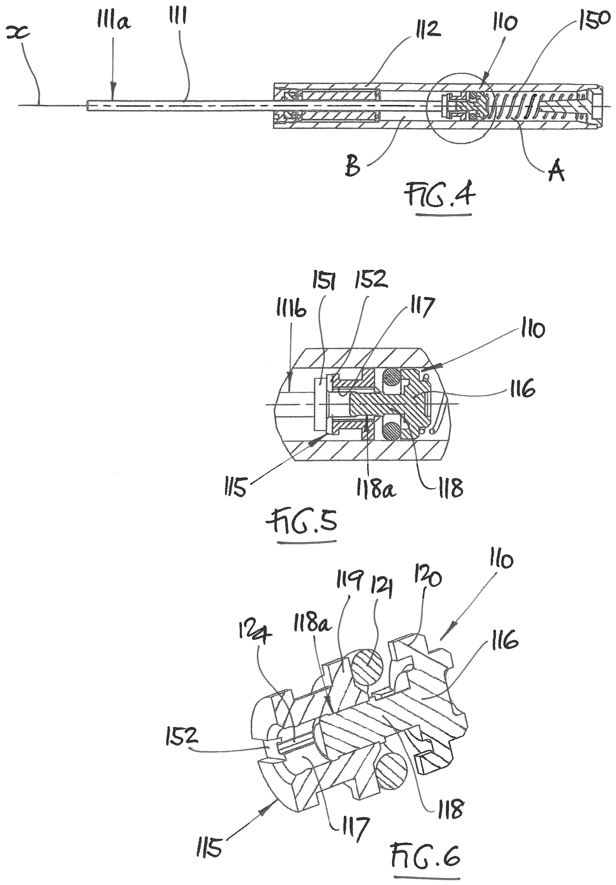

The damper seen in Figure 4 is different in various respects from the Figure 1 damper. For one thing, the free end 111a of its piston rod 111 is not designed to be connected to eg a furniture part, but to simply abut against it. In this case, therefore, the damper incorporates a compression spring 150 which is mounted within the cylinder 112 between the end cover 130 and the piston assembly 110. The spring 150 acts via the piston assembly 110 on the piston rod 111 to ensure that it is always biassed to return to its starting position, ready to provide damped resistance on its working stroke.

The design of the piston assembly 110 is also different in the Figure 4 damper, as seen in more detail in Figures 5 and 6. Here, the inner end 111b of the piston rod 111 terminates in a flange 151 with which it simply abuts the end face of the piston assembly 110. The piston assembly 110 is again made in two parts, a main valve body 115 and a cap 116, with a passageway for flow of damping fluid across it. The passageway incorporates a restricted passage for controlling the flow and this again takes the form of axially extending grooves 124 provided as a diametrically opposed pair within a bore 117 in the valve body 115. In this case, an end portion 118a of an axially extending spigot 118 formed on the cap 116 is designed to be received by the bore 117 so as to occlude it. The grooves 124 thus constitute a restricted passage for flow of fluid. The spigot 118 is designed to engage in the bore 117 with a snap-fit connection. Chamber A in the cylinder 112 communicates with the grooves 124 via ports 122 in a flange 119 extending radially from the valve body 115. The grooves 124 open into chamber B via a transverse channel 152 in the end face of the valve body 115.

The piston assembly 110 again comprises a sealing element in the form of an O-ring 121 in sealing engagement with the bore of the cylinder. The O-ring 121 is captured between the flange 119 on the valve body 115 and a radially extending flange 120 on the cap 116, both flanges being of the castellated type of construction described above. The O-ring 121 has the same function as the O-ring 21 in the Figure 1 damper, ie it controls the flow of damping fluid across the piston assembly. On the working stroke of the damper, the O-ring 121 gets picked up by the flange 119 on the valve body 115, thus creating a seal between the piston assembly 110 and the cylinder. In this condition, the only passageway for flow of fluid across the piston assembly 110 is via the restricted passage, ie the grooves 124. The damper thus produces damped resistance to this movement.

This design of piston assembly has the same advantages as the Figure 1 damper in terms of its suitability for manufacture. Its damping characteristics are also easy to tailor. For example, the length of the grooves can be varied by simply adjusting the extent of insertion of the spigot 118a into the bore 117 of the valve body 115.

The spigot 118 here is again designed to be significantly smaller than the bore of the O-ring 121 in order to allow a large cross-sectional area for the return flow of fluid. As before, the spigot 118 occupies a proportion of the cross-sectional area of the O-ring bore of less than half, and preferably less than a third.

Figure 7 shows a modified form of engagement between the piston rod 211 and the piston assembly 210. The piston rod 211 again has a flange 251 with which it abuts the end face of the piston assembly 210. In this case, however, the piston rod 211 has a portion of its inner end 211b extending beyond the flange 251 and into engagement with the bore 217 of the valve body 215. An advantage of this arrangement is that it provides lateral support for the inner end 211b of the piston rod 211 in its reciprocal movement in the cylinder.

Figure 8 shows a further modified form of engagement between the piston rod 311 and the piston assembly 310. The piston rod 311 again has a flange 351 with which it abuts the end face of the piston assembly 310. Here, the valve body 315 of the piston assembly 310 terminates in a collar 360, which is arranged to capture the flange 351 of the piston rod 311. The collar 360 thus acts to hold the piston rod 311 and the piston assembly 310 together as a unit. As in previous embodiments, the piston assembly 310 comprises an O-ring 321, which is captured between a flange 319 on the valve body 315 and a second flange 320 axially spaced from it.

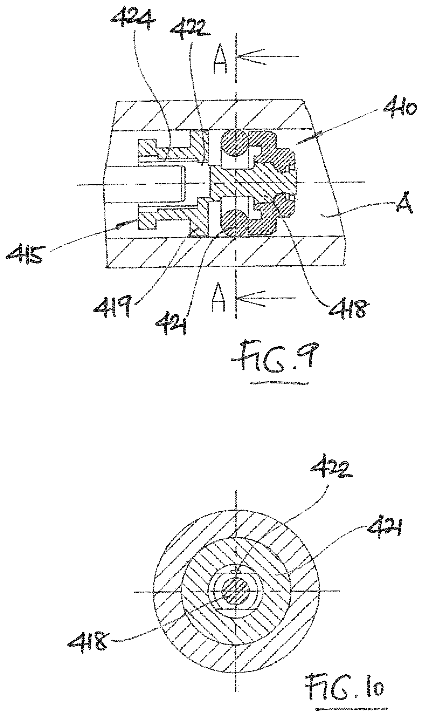

The form of piston assembly seen in Figure 9 is similar to that seen in Figure 2. The difference is in the design of the porting, ie the means of communication of chamber A with the fluid passageway through the piston assembly 410. In this case, communication from chamber A is provided by a single port 422 (as opposed to the pair of ports 22 in the Figure 2 example). The port 422 is in the form of a groove extending through the flange 419 of the valve body 415 parallel to the axis of the piston assembly. Here the port 422 has a rectangular cross-sectional shape.

The cross-sectional area of the port 422 is relatively small. It therefore has a throttling effect on fluid flowing through it, ie it tends to restrict the flow. Thus, in this example, the port 422 supplements the grooves 424 in providing the restricted passage for controlling the flow of damping fluid on the working stroke of the damper.

As with the grooves 424, the configuration of the port 422 can be varied to determine the damping characteristics of the damper. In particular, its cross-sectional area and/or length can be varied, as can its cross-sectional shape, which could be made to vary along its length, eg in stepped or tapered form.

As with the grooves 424, the port 422 can conveniently be formed by suitable coring, if the piston assembly is formed in an injection moulding process. Forming the piston assembly 410 with the port 422 in this manner enables it to be made with a relatively high degree of accuracy, which is important for producing dampers with prescribed damping criteria. The manner of manufacture also means that it is reliably repeatable on a production line, even though the dimensions of the port will be comparatively small.

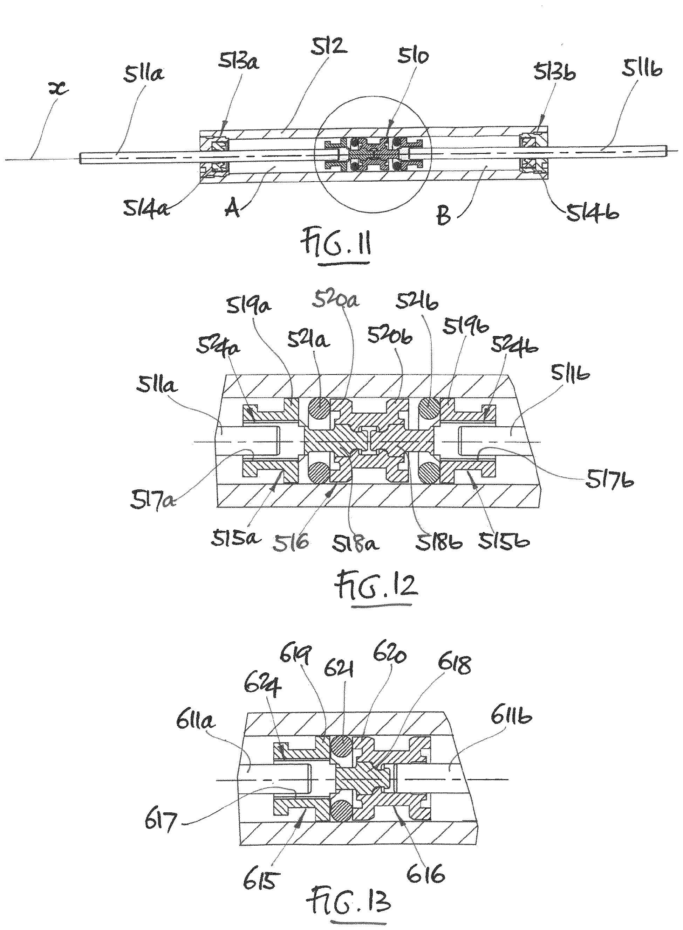

The damper seen in Figure 11 is double ended. It has a piston assembly 510 that is mounted within an elongate cylinder 512 for linear reciprocal movement along a longitudinal axis x, as in the embodiments described above. In this case, however, the damper has two piston rods 511a, 511b which extend respectively to either side of the piston assembly 510. The two piston rods 511a, 511b protrude with their free ends out of either end of the cylinder 512 and engage the piston assembly 510 with their inner ends. Seat assemblies 513a, 513b at the ends of the cylinder 512 provide support for the slidable mounting of respective piston rods 511a, 511b and include suitable seals 514a, 514b to prevent leakage of damping fluid out of the cylinder.

The piston assembly 510 divides the interior of the cylinder 512 into two separate chambers A and B, and is seen in greater detail in Figure 12. In this case, it is made in three parts: two elongate valve bodies 515a, 515b and a collar 516. Each valve body 515a, 515b is essentially of the same design as the valve body 15 of the piston assembly 10 seen in Figure 2. Thus, each has an axially extending bore 517a, 517b at one end for receiving the inner end of its respective piston rod 511a, 511b. Grooves 524a, 524b in the respective bores 517a, 517b provide pathways for restricted flow of damping fluid, in a similar manner to the damper of Figure 2. At their other end, each valve body 515a, 515b has an axially extending spigot 518a, 518b with which they are attached to the collar 516, conveniently by means of snap fittings.

The piston assembly 510 here incorporates two annular sealing elements, each in the form of an O-ring 521a, 521b. Each O-ring 521a, 521b is associated with a respective piston rod 511a, 511b and is captured between a flange 519a, 519b on its respective valve body 515a, 515b and respective flanges 520a, 520b on the collar 516. The O-rings 521a, 521b are designed to control passage of damping fluid across the piston assembly 510, and each operates in essentially the same manner as the O-ring 21 of the damper seen in Figure 2. Thus, when one of the piston rods 511a, 511b experiences an axial impact, its respective O-ring 521a, 521b will be caused to take up a position where it forms a seal between the cylinder 512 and the flange 519a, 519b of its respective valve body 515a, 515b, leaving only the respective grooves 524a, 524b as a pathway for flow of damping fluid between the two chambers A and B. In this way, inward movement of the impacted piston rod 511a, 511b is effectively opposed by a damped resistive force.

It will be understood that in the double ended damper seen in Figure 11, inward movement of either piston rod 511a, 511b will be opposed by a damped resistive force, although of course the magnitude of this force may be not necessarily be the same for each piston rod.

It will further be noted that, as with the dampers described above, the restricted pathway through each valve body 515a, 515b of the piston assembly 510, which controls flow of damping fluid between the two chambers A and B, is located at a position axially spaced apart from its respective O-ring 521a, 521b.

The modified form of piston assembly seen in Figure 13 comprises just two parts: a valve body 615 and a collar 616. The valve body 615 has a bore 617 in which it receives the inner end of one of the two piston rods 611a, with grooves 624 in the bore providing a pathway for restricted flow of damping fluid across the piston assembly, as in the manner described above. The valve body 615 is connected to the collar 616 by means of a snap-fitting spigot 618, and the collar receives the inner end of the other of the two piston rods 611b with an interference fit.

The piston assembly in this case includes an annular sealing element, which is again in the form of an O-ring 621. Here, however, the O-ring 621 is captured between flanges 619 and 620 on respectively the valve body 615 and the collar 616 so as to be in a fixed position relative to the piston assembly. Thus, the damping characteristics of this damper are fixed, and the same in either direction of movement of the piston rods 611a, 611b.

It will be noted again that, as with the dampers described above, the restricted pathway through the valve body 615 of the piston assembly, which controls flow of damping fluid between the two chambers A and B, is located at a position axially spaced apart from the O-ring 621.

The double ended dampers described above may be provided with a compression spring within the cylinder to one or both sides of the piston assembly.

## Claims

1. A piston and cylinder type damper with a cylinder (12, 112, 512) containing damping fluid having a longitudinal axis and a piston assembly (10, 110, 310, 410, 510) mounted therein for reciprocal movement along said axis, with the piston assembly dividing the cylinder into two chambers and providing a passageway for flow of damping fluid therebetween, the passageway including a control passage for restricting flow of damping fluid, and a sealing element (21, 121, 321, 421, 521a, 521b) for selectively sealing the piston assembly against the cylinder, with the control passage and the sealing element being positioned at axially spaced apart locations,
wherein the sealing element comprises an O-ring (21, 121, 321, 421, 521a, 521b),
wherein the piston assembly comprises a radially extending first flange (19, 119, 319, 519a, 519b) for selectively sealing against the O-ring and a radially extending second flange (20, 120, 320, 520a, 520b) spaced axially from the first flange, wherein the two flanges act as limit stops for the axial movement of the O-ring, and
**characterised in that** the two flanges are connected by a spigot (18, 118, 418, 518a, 518b), wherein the spigot extends through the internal bore of the O-ring and occupies a proportion of the cross-sectional area of the O-ring bore of less than half.

2. A damper as claimed in claim 1 wherein the control passage includes one or more grooves on the inner surface of a bore.

3. A damper as claimed in claim 2 wherein the control passage further includes an element located within the bore so as to occlude it.

4. A damper as claimed in claim 3 wherein the damper includes a piston rod and a part of the piston rod forms the element that is located within the bore.

5. A damper as claimed in claim 3 wherein the piston assembly is made of two or more components and a part of one of the components forms the element that is located within the bore.

6. A damper as claimed in any one of claims 3 to 5 and further comprising means for limiting the extent of insertion of the element in the bore, whereby to determine the length of the control passage.

7. A damper as claimed in any one of claims 2 to 6 wherein the or each groove and the bore extend parallel to the longitudinal axis of the cylinder.

8. A damper as claimed in any one of claims 2 to 7 wherein the or each groove is of constant cross-section along its length.

9. A damper as claimed in claim 1 wherein the O-ring is mounted on the piston assembly to be movable between one position in which it seals off the piston assembly against the cylinder and another position in which it does not seal off the piston assembly.

10. A damper as claimed in claim 9 wherein the O-ring is movable relative to the piston assembly in a direction parallel to the longitudinal axis of the cylinder.

11. A damper as claimed in claim 1 wherein the or each groove communicates with one of the chambers via a port in the flange adjacent to the spigot.

12. A damper as claimed in claim 11 wherein the port forms an additional part of the control passage.

13. A damper as claimed in any preceding claim wherein at least the first flange is of a castellated type of construction.

14. A damper as claimed in any preceding claim wherein the damper comprises two coaxially aligned piston rods, each extending from a respective axial end of the piston assembly and protruding out of a respective axial end of the cylinder.

15. A damper as claimed in claim 14 wherein the control passage and the sealing element are arranged to provide restricted flow of damping fluid between the two chambers in either direction of axial movement of the piston rods.

## Patentansprüche

1. Kolbenzylinderdämpfer mit einem Dämpfungsfluid enthaltenden Zylinder (12, 112, 512), der eine Längsachse und eine zur hin- und hergehenden Bewegung entlang der Achse darin angebrachten Kolbenanordnung (10, 110, 310, 410, 510) aufweist, wobei die Kolbenanordnung den Zylinder in zwei Kammern teilt und einen Durchgang für den Fluss von Dämpfungsfluid dazwischen bereitstellt, wobei der Durchgang einen Steuerdurchlass zum Drosseln des Flusses von Dämpfungsfluid und ein Dichtungselement (21, 121, 321, 421, 521a, 521b) zum selektiven Dichten der Kolbenanordnung an dem Zylinder umfasst, wobei der Steuerdurchlass und das Dichtungselement an axial voneinander beabstandeten Orten positioniert sind,
wobei das Dichtungselement einen O-Ring (21, 121, 321, 421, 521a, 521b) umfasst,
wobei die Kolbenanordnung einen sich radial erstreckenden ersten Flansch (19, 119, 319, 519a, 519b) zum selektiven Dichten an dem O-Ring und einen sich radial erstreckenden zweiten Flansch (20, 120, 320, 520a, 520b), der von dem ersten Flansch axial beabstandet ist, umfasst, wobei die zwei Flansche als Endanschläge für die Axialbewegung des O-Rings wirken, und
**dadurch gekennzeichnet, dass** die zwei Flansche durch einen Zapfen (18, 118, 418, 518a, 518b) verbunden sind, wobei sich der Zapfen durch das innere Loch des O-Rings erstreckt und einen Anteil der Querschnittsfläche des O-Ringlochs von weniger als der Hälfte einnimmt.

2. Dämpfer nach Anspruch 1, wobei der Steuerdurchlass eine oder mehrere Rillen auf der Innenoberfläche eines Lochs umfasst.

3. Dämpfer nach Anspruch 2, wobei der Steuerdurchlass ferner ein Element umfasst, das sich in dem Loch befindet, um dieses zu verschließen.

4. Dämpfer nach Anspruch 3, wobei der Dämpfer eine Kolbenstange umfasst und ein Teil der Kolbenstange das Element bildet, das sich in dem Loch befindet.

5. Dämpfer nach Anspruch 3, wobei die Kolbenanordnung aus zwei oder mehr Komponenten hergestellt ist und ein Teil einer der Komponenten das Element bildet, das sich in dem Loch befindet.

6. Dämpfer nach einem der Ansprüche 3 bis 5 und ferner umfassend Mittel zum Begrenzen des Ausmaßes des Einsteckens des Elements in das Loch, um dadurch die Länge des Steuerdurchlasses zu bestimmen.

7. Dämpfer nach einem der Ansprüche 2 bis 6, wobei sich die oder jede Rille und das Loch parallel zu der Längsachse des Zylinders erstrecken.

8. Dämpfer nach einem der Ansprüche 2 bis 7, wobei die oder jede Rille einen konstanten Querschnitt entlang ihrer Länge aufweist.

9. Dämpfer nach Anspruch 1, wobei der O-Ring an der Kolbenanordnung angebracht ist, um zwischen einer Stellung, in der er die Kolbenanordnung gegen den Zylinder abdichtet, und einer anderen Stellung, in der er die Kolbenanordnung nicht abdichtet, bewegbar zu sein.

10. Dämpfer nach Anspruch 9, wobei der O-Ring relativ zu dem Kolbenanordnung in einer Richtung parallel zu der Längsachse des Zylinders bewegbar ist.

11. Dämpfer nach Anspruch 1, wobei die oder jede Rille über eine dem Zapfen benachbarte Öffnung in dem Flansch mit einer der Kammern in Verbindung steht.

12. Dämpfer nach Anspruch 11, wobei die Öffnung einen zusätzlichen Teil des Steuerdurchlasses bildet.

13. Dämpfer nach einem der vorangehenden Ansprüche, wobei mindestens der erste Flansch einen Aufbau mit Zinnen aufweist.

14. Dämpfer nach einem der vorangehenden Ansprüche, wobei der Dämpfer zwei koaxial ausgerichtete Kolbenstangen umfasst, die sich jeweils von einem jeweiligen axialen Ende der Kolbenanordnung erstrecken und aus einem jeweiligen axialen Ende des Zylinders vorstehen.

15. Dämpfer nach Anspruch 14, wobei der Steuerdurchlass und das Dichtungselement dazu angeordnet sind, einen gedrosselten Fluss von Dämpfungsfluid zwischen den zwei Kammern in beiden Richtungen der Axialbewegung der Kolbenstangen bereitzustellen.

## Revendications

1. Amortisseur du type à piston et à cylindre comprenant un cylindre (12, 112, 512) contenant un fluide d'amortissement ayant un axe longitudinal et un ensemble formant piston (10, 110, 310, 410, 510) monté dans celui-ci à des fins de mouvement de va-et-vient le long dudit axe, l'ensemble formant piston divisant le cylindre en deux chambres et mettant en œuvre une voie de passage pour l'écoulement du fluide d'amortissement entre elles, la voie de passage comprenant un passage de régulation servant à limiter l'écoulement du fluide d'amortissement, et un élément d'étanchéité (21, 121, 321, 421, 521a, 521b) servant à sceller de manière sélective l'ensemble formant piston contre le cylindre, le passage de régulation et l'élément d'étanchéité étant positionnés au niveau d'emplacements espacés l'un de l'autre dans le sens axial,
dans lequel l'élément d'étanchéité comporte un joint torique (21, 121, 321, 421, 521a, 521b),
dans lequel l'ensemble formant piston comporte une première bride s'étendant dans le sens radial (19, 119, 319, 519a, 519b) servant à sceller de manière sélective contre le joint torique et une deuxième bride s'étendant dans le sens radial (20, 120, 320, 520a, 520b) espacée dans le sens axial par rapport à la première bride, dans lequel les deux brides agissent en tant que butées de fin de course pour le mouvement axial du joint torique, et
**caractérisé en ce que** les deux brides sont raccordées par un bout uni (18, 118, 418, 518a, 518b), dans lequel le bout uni s'étend au travers de l'alésage interne du joint torique et occupe une proportion de la section transversale de l'alésage du joint torique de moins de la moitié.

2. Amortisseur selon la revendication 1, dans lequel le passage de régulation comprend une ou plusieurs rainures sur la surface intérieure d'un alésage.

3. Amortisseur selon la revendication 2, dans lequel le passage de régulation comprend par ailleurs un élément situé à l'intérieur de l'alésage de manière à l'occlure.

4. Amortisseur selon la revendication 3, dans lequel l'amortisseur comprend une tige de piston et une partie de la tige de piston forme l'élément qui est situé à l'intérieur de l'alésage.

5. Amortisseur selon la revendication 3, dans lequel l'ensemble formant piston est réalisé à partir de deux composants ou plus et une partie de l'un des composants forme l'élément qui est situé à l'intérieur de l'alésage.

6. Amortisseur selon l'une quelconque des revendications 3 à 5 et comportant par ailleurs un moyen servant à limiter l'étendue de l'insertion de l'élément dans l'alésage, pour de ce fait déterminer la longueur du passage de régulation.

7. Amortisseur selon l'une quelconque des revendications 2 à 6, dans lequel la ou chaque rainure et l'alésage s'étendent de manière parallèle par rapport à l'axe longitudinal du cylindre.

8. Amortisseur selon l'une quelconque des revendications 2 à 7, dans lequel la ou chaque rainure est d'une section transversale constante sur toute sa longueur.

9. Amortisseur selon la revendication 1, dans lequel le joint torique est monté sur l'ensemble formant piston pour être mobile entre une position dans laquelle il scelle l'ensemble formant piston contre le cylindre et une autre position dans laquelle il ne scelle pas l'ensemble formant piston.

10. Amortisseur selon la revendication 9, dans lequel le joint torique est mobile par rapport à l'ensemble formant piston dans une direction parallèle par rapport à l'axe longitudinal du cylindre.

11. Amortisseur selon la revendication 1, dans lequel la ou chaque rainure communique avec l'une des chambres par le biais d'un orifice dans la bride adjacente par rapport au bout uni.

12. Amortisseur selon la revendication 11, dans lequel l'orifice forme une partie supplémentaire du passage de régulation.

13. Amortisseur selon l'une quelconque des revendications précédentes, dans lequel au moins la première bride est d'un type de construction à créneaux.

14. Amortisseur selon l'une quelconque des revendications précédentes, dans lequel l'amortisseur comporte deux tiges de piston alignées de manière coaxiale, chacune s'étendant depuis une extrémité axiale respective de l'ensemble formant piston et faisant saillie depuis une extrémité axiale respective du cylindre.

15. Amortisseur selon la revendication 14, dans lequel le passage de régulation et l'élément d'étanchéité sont agencés pour mettre en œuvre un écoulement limité du fluide d'amortissement entre les deux chambres dans l'une ou l'autre direction du mouvement axial des tiges de piston.
